# EUROPEAN PATENT SPECIFICATION

(11) **EP 1 456 043 B1**
(45) Date of publication and mention of the grant of the patent: **12.12.2007**
(21) Application number: 02805822.0
(22) Date of filing: 18.12.2002
(51) Int. Cl.: B60D 1/66, B60S 9/16

(54) **SUPPORT LEG ASSEMBLY FOR VEHICLE TRAILER**
STÜTZBEINANORDNUNG FÜR FAHRZEUGANHÄNGER
ENSEMBLE BRAS DE SUPPORT POUR REMORQUE DE VEHICULE

(30) Priority: 21.12.2001 GB 0130598
(43) Date of publication of application: 15.09.2004
(73) Proprietor: Fullwood, David, Chester CH3 7EW (GB)
(72) Inventor: Fullwood, David, Chester CH3 7EW (GB)
(74) Representative: Wood, Graham
(86) International application number: PCT/GB2002/005766
(87) International publication number: WO 2003/055705

(56) References cited:
- EP-A- 0 891 889
- EP-B- 0 425 632
- DE-B- 1 062 124
- GB-A- 532 868
- US-A- 2 965 392
- US-A- 5 709 362

## Description

The invention to which this application relates is to provide at least one support leg, but more typically, two support legs for a vehicle trailer and particularly, but not necessarily exclusively, support legs for use in relation to articulated vehicle goods transport trailers.

The use of support legs to support trailers when the same are not mounted on the rear of lorry or tractor units, is well known. The leg assemblies are provided to maintain the trailer in substantially horizontal and stationary position and to replace the support which would normally be given by the rear of the tractor unit. When the tractor unit is brought into connection with the vehicle trailer to transport the same then the support legs are moved to a retracted position:

Conventionally, the support legs are provided as a telescopic assembly wherein there is provided a first member which can be moved between a retracted position wherein at least a portion of the same lies within the second member, and an extended, in use position wherein a smaller portion of the said first member lies within said second member. The movement of the first member between the retracted and extended positions is achieved via a gear mechanism and a turning handle. In practise, the gear mechanism is not particularly effective and so can lead to the vehicle operator, who is required to turn the handle, having to make a large number of turns to bring about the required movement hence causing physical fatigue to the driver and also, potential danger to the driver if for example they are required to turn the handle at a roadside and/or the risk of injury to the driver by their use of the handle.

A further problem with the conventional leg assembly is that when in an extended condition, the first member may only have a relatively small portion located within the second member and so, while the leg may be strong in the vertical plane, it is susceptible to buckling in a horizontal direction due to the relatively small joining portion between the first and second members. This buckling can take place over a length of time and therefore may not immediately be apparent to the operator of the trailer.

A further problem with the conventional leg assembly is that if the leg assembly, when moved to the extended position, is extended too far or too little then the trailer is not held in the required plane to allow the tractor unit to be reversed to engage with the engagement means provided on the trailer. This can mean that the tractor unit, when reversing to engage with the trailer, can bump into the trailer and damage the same or, if the legs are extended too far, then engagement may not be possible between the trailer and the tractor unit. It can also cause problems in the suspension of the trailer, when connected to the tractor unit as the wheels of the trailer attempt to take into account the fact that the same is too high or too low.

Typically, the conventional support legs are provided in pairs, mounted a spaced distance apart across the width of the trailer on the underside thereof. The support legs are typically both moved between retracted and extended positions by one handle movement with the leg gear assemblies being connected by a shaft which passes between the two support legs.

GB532868 discloses a support leg assembly for a vehicle trailer in which the leg is movable.

There are significant problems with the conventional support legs used and the aim of the present invention is to provide a leg assembly for use in supporting a vehicle trailer when it is at rest and to provide such an assembly which is more user friendly and more effective in preventing secure support for the trailer.

In accordance with the first aspect of the invention there is provided a support leg assembly for a vehicle trailer, said support leg provided to allow support for a vehicle trailer on a surface when said trailer is in a stationary condition, and uncoupled from a tractor unit, said support leg assembly movable between in use and storage conditions and comprises a first member located on the vehicle trailer and a second member located on said first member, said second member movable with respect to the first member to move between an in-use condition and a storage condition to allow the second member, when in the storage condition to be angularly disposed with respect to the first member, the upper end of the second member received in the in-use condition in a location socket on the first member, said second member connected to the movement means operated by selective connection to a compressed air supply on the tractor unit, the compressed air supply connectable after coupling of the tractor unit and trailer and the movement means operated to move the second member from the in-use condition to a storage condition upon connection, with the air supply disconnectable prior to the uncoupling of the tractor unit and trailer and when the compressed air supply is disconnected, the second member is released from the storage condition to move to the in-use condition prior to the decoupling of the tractor unit from the trailer to support said trailer and characterised in that engagement means between the first and second members includes a pin which defines a pivot location about which the second member rotates and the pin is located in a slot which allows limited linear movement between the first and second members to allow the same to be moved between an in-use condition and an intermediate condition from which the second member can be pivotally moved with respect to the first member to move the same to the storage condition.

Typically a proportion of the movement is rotation about a pivot point between the first and second members.

Typically, when in the in-use condition, the second member is positioned in line with the first member and typically a portion of the second member is located within the first member.

The first member includes a location socket for the second member when in the in-use condition so as to secure and locate the second member in said in-use condition. In one embodiment the location socket is formed of rubber or other similar material, suitable to provide a cushioning effect.

The end of the second member of the support leg assembly which contacts with the surface can be provided with any of the conventional forms of contact surface such as a plate, wheel or the like. In one embodiment, if wheels are provided, then preferably two of said wheels are located along a common shaft with three shafts or axle supports, one at each outer edge of the wheel assembly and the third located between the two wheels, thus providing additional support. This is an independent feature of this invention which could be used with the support leg assembly as herein described or alternatively with the conventional support leg.

The support leg assembly can be used individually or may be used in conjunction with at least one other support leg assembly in accordance with the invention.

Typically the air supply to the movement means is provided from the vehicle tractor unit, when said tractor unit is connected to the trailer.

The movement means as described means that as the air supply is only connected when the trailer is connected to the tractor unit then the movement of the support leg assembly to the storage condition can only be powered and therefore take place once the trailer is safely mounted on the tractor unit. This therefore means that there is provided an important safety feature in that the support leg assembly will always be in the in-use condition and must be maintained in that condition while there is no air supply to the trailer and hence while the trailer is unsupported by a tractor unit. Only when the trailer is successfully supported by the tractor unit can the support leg assembly move to the storage condition. Typically the air supply is provided once the "safety air line", commonly referred to as the red air line, is connected between the tractor unit and the air supply system of the vehicle trailer. In one embodiment the system can be used with an independent air supply.

Specific embodiments of the invention are now described with reference to the accompanying diagrams wherein:-
Figure 1A illustrates a support leg assembly in accordance with the invention in elevation in an in-use condition;
Figure 1B illustrates a yet further embodiment of the slot arrangement;
Figure 2 illustrates the support leg assembly of Figure 1A with the members of the assembly in an intermediate position;
Figure 3 illustrates the support leg assembly in a storage condition and having been moved by movement means in accordance with one embodiment of the invention;
Figure 4 illustrates an end elevation of the leg assembly in an intermediate condition;
Figure 5 illustrates detail of the legs in a retracted condition on a vehicle trailer.
Figure 6 illustrates a further embodiment of the invention;
Figures 7-10 illustrate a further embodiment of the invention.

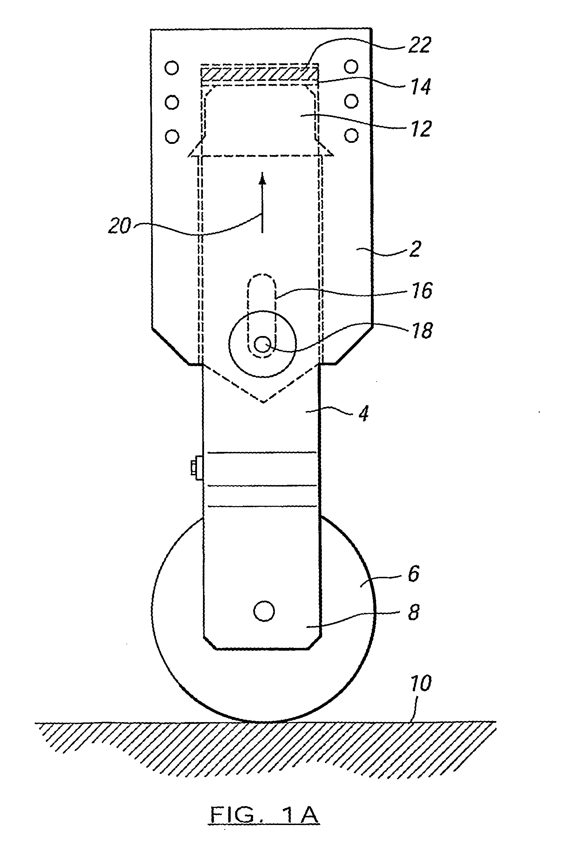

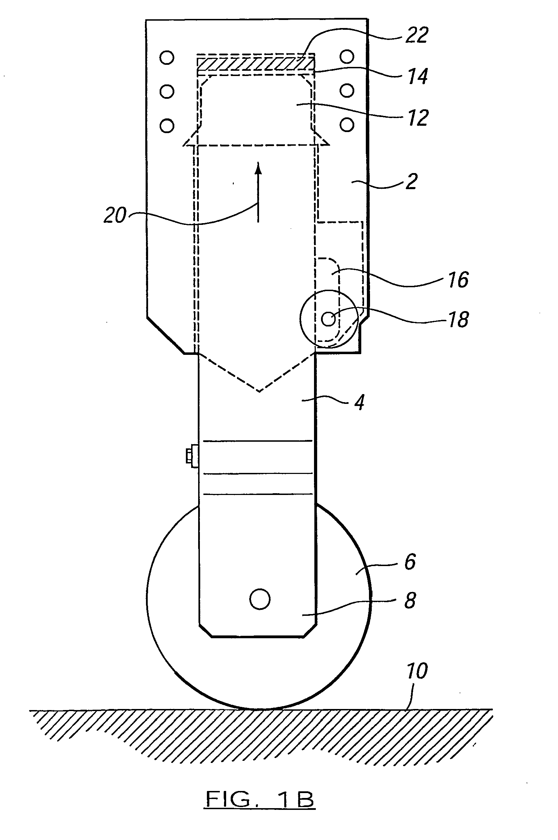

Referring firstly to Figures 1A and 1B there is illustrated two embodiments of a support leg assembly in accordance with the invention in elevation. The assembly comprises a first member 2 which is connected to the vehicle trailer (not shown) and a second member 4 is located with the first member.

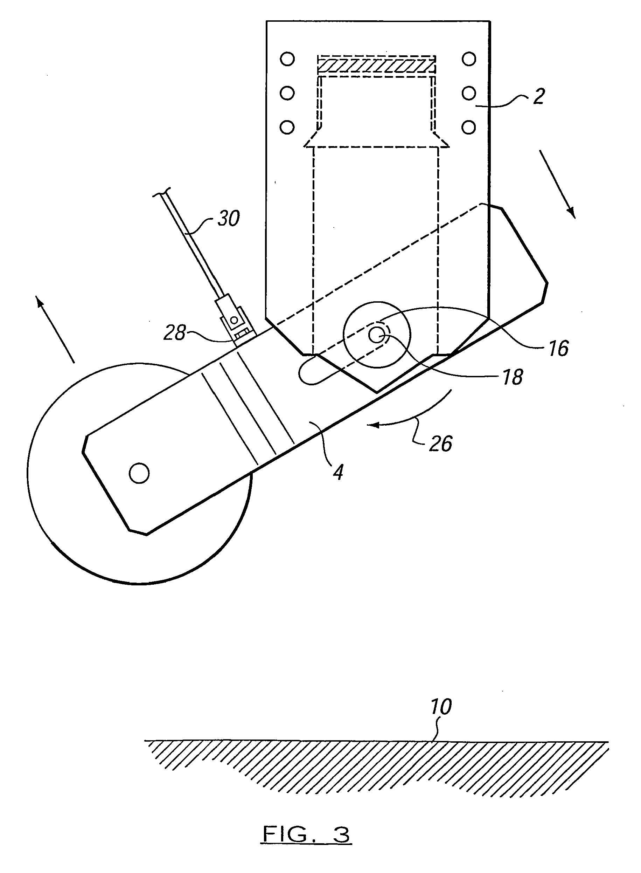

In the position shown in Figures 1A and 1B, the first and second members are in an in-use condition in which the wheels 6 at the end 8 of the second member 4 are in contact with the surface 10 and serving to support the trailer to which the support leg assembly is located in the required position and at the required height. To achieve this, the second member 4 is located, at end 12 in a locating socket 14 provided within the first member 2. The first member is typically formed from three sides with an open side to allow the second member 4 to pivot through the open side when in the intermediate portion as shown in Figure 3. The movement of the second member into the location socket is facilitated by the provision of the slot 16, in the case of Figure 1A in the second member, along which the pin 18, in this case in the first member, can move. Thus, when the first and second members are brought to the position as shown and the vehicle trailer is not supported by a tractor unit then the weight of the trailer acts on the first member 2 to cause the second member 4 to move in the direction illustrated by arrow 20 to engage in the location socket 14. The relative positions of location socket and the length of the slot 16, and position of pin 18 are designed to be such that the end 12 of the second member contacts the cushion member 22 in the location socket 14 prior to the pin 18 reaching the end of the slot 16. This acts to prevent damage to the pin and slot arrangement and also acts as a cushioning means to prevent damage to the wheels 2 and axles 8 of the second member and to take the stock as it moves into the location socket. Thus, in the position shown in Figure 1A, the vehicle trailer can be securely supported at the required height.

Figure 1B illustrates an alternative embodiment wherein the leg assembly is again pivotal to a storage condition and in this case the slot 16 is located on the side of the second member 4. This offset gives a weight bias to the opposite side of the leg which helps the leg swing back into a vertical position inside the 3 sided member 2 and therefore can act as an extra safety feature.

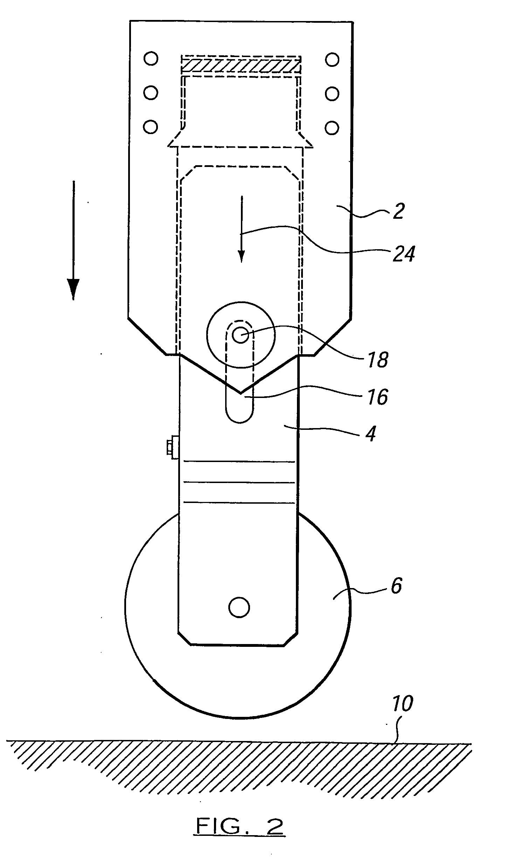

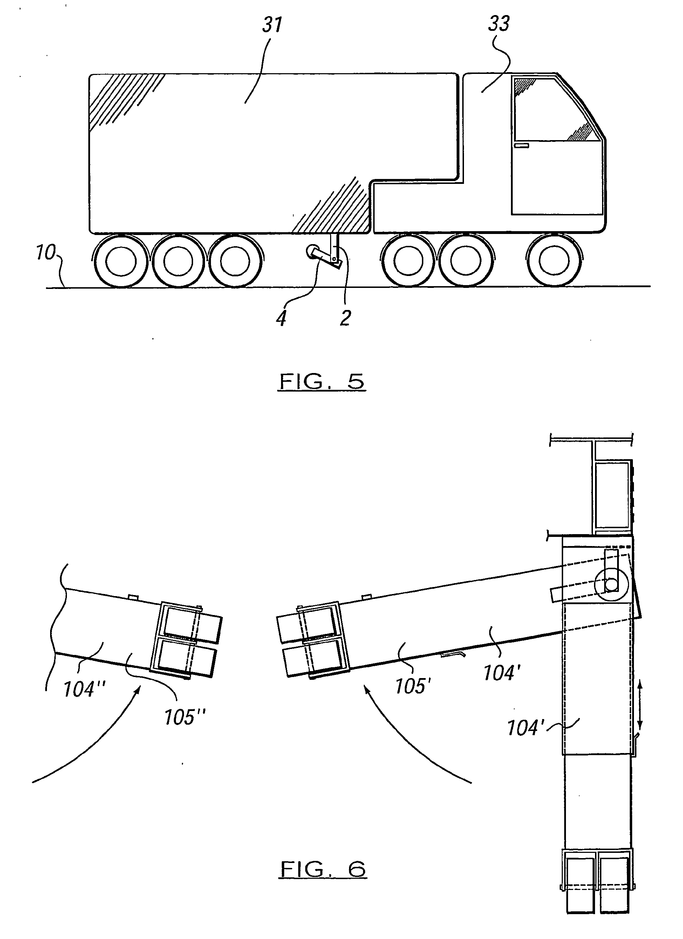

When the vehicle tractor unit is brought into engagement with the trailer and thereby takes the weight of the trailer off the support leg assembly, then the support leg assembly moves to an intermediate position as illustrated in Figure 2 where the wheel 6 is removed from the surface 10 and the second member 4 is free to move under the influence of gravity as indicated by arrow 24 downwardly with the pin 18 and slot 16 relatively moving so that the pin 18 is brought to the top of the slot 16 as shown in Figure 2. With the weight removed from the support leg assembly then the second member is held in the intermediate condition by means of the pin in the slot and is free to pivotally move around the pin so that the second member 4 can be pivotally moved as illustrated by arrow 26 in Figure 3 to a storage condition. Thus it will be seen that the pin 18 remains in the same location with respect to the slot 16 and the second member 4 is pivotally moved with respect to the first member 2 to a storage condition wherein the same is no longer near the surface 10. The storage condition with respect to the trailer 31 and tractor unit 33 is illustrated in Figure 5 where it can be seen that the support leg assembly second member 4 is stored with a large clearance from the surface 10.

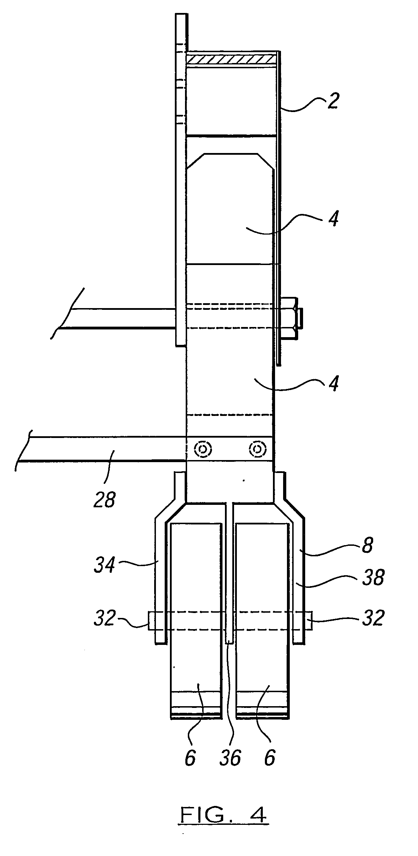

In the embodiment shown in Figure 3 the pivotal movement of the second member is achieved via a movement means including a lift bar 28, also shown in Figure 4, which is attached to the second member and is also attached to a bar or cable 30 which in turn is connected to an air control system, not shown. The air control system acts to control the movement of the bar or cable 30 and lift bar 28 so as to draw the second member to the storage position as shown in Figure 3.

Figure 4 illustrates an end elevation of the support leg assembly in the intermediate condition similar to Figure 2. It also illustrates a particularly effective arrangement for wheels 6 at the end 8 of the second member 4 whereby the wheels are located on a common axle 32 and said axle is located by three support members 34, 36 and 38. The provision of the three axles supports ensures effective and strong support for the wheels and minimises the risk of damage to the axle and wheels and/or the leg assembly.

It should be noted however that the leg assembly can equally be provided with feet or other surface mounting arrangements.

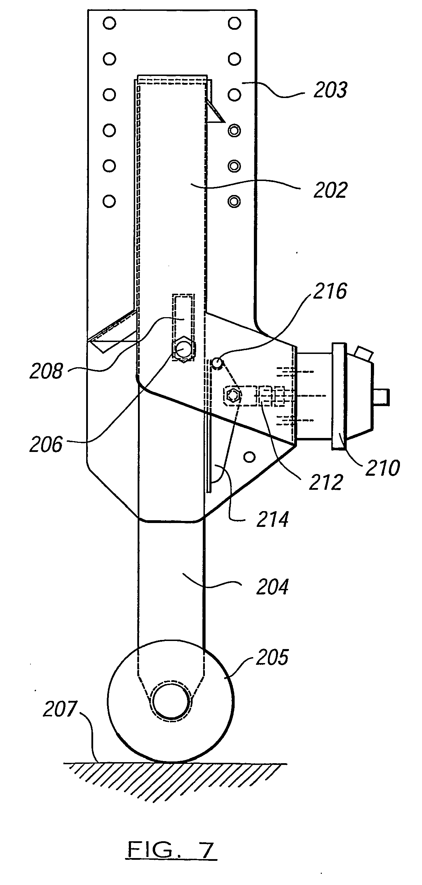

In all of the Figures with the exception of Figure 6 the second member 4 moves along a line parallel with the length of the trailer between storage and in-use conditions. However in Figure 6 the second member 104, 104" move inwardly of the trailer to the storage condition shown by the reference inwards 105', 105". This arrangement includes all of the other features herein described.

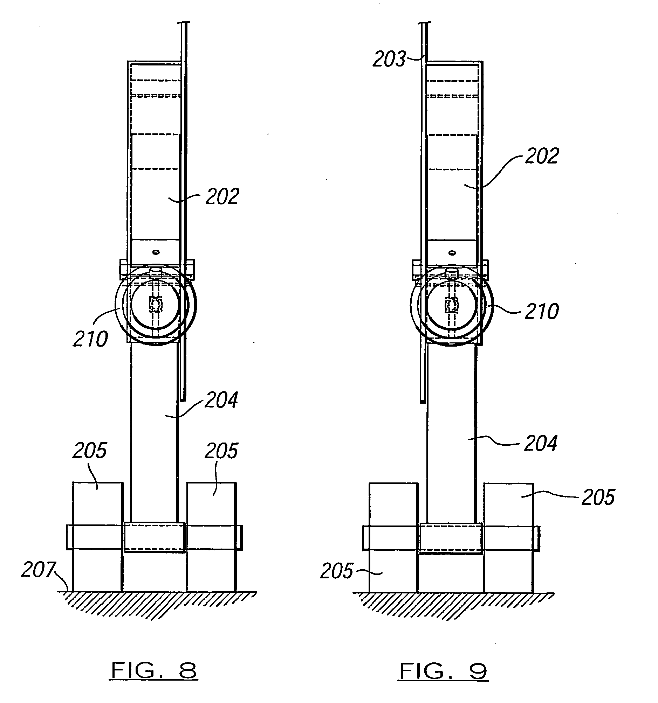

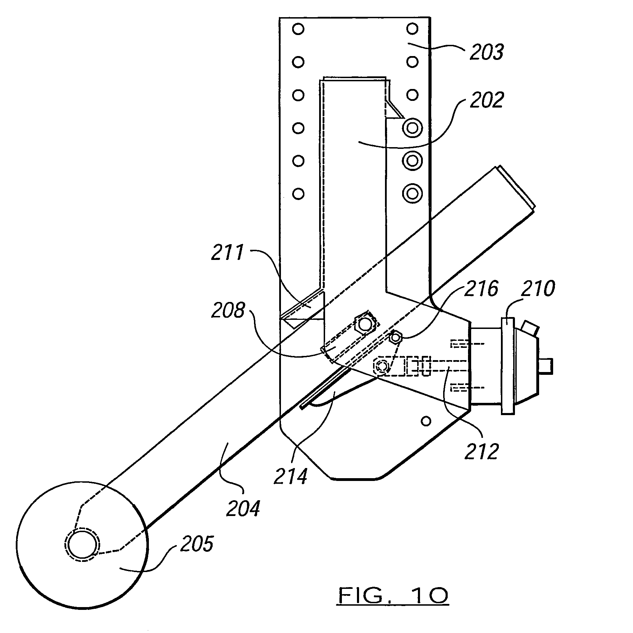

Figures 7-10 illustrate a further preferred embodiment of the invention. In Figures 7 and 8 the support leg with wheels or rollers 205 for contact with a surface 207 is shown in the use condition and again comprises a first member 202 connected to the vehicle trailer via plate 203. The second member 204 is operated to pivotally move around pivot point 206 and also along slot 208 in a similar manner to that which has already been described with reference to the other embodiments. Figures 9 and 10 illustrate the trailer leg in the storage position with the second member 204 having moved around the pivot point 206 in the same manner as previously described to a position against a deformable stop 211 and which will therefore not be described again. However the difference in this case is the manner in which the movement is achieved. The movement is powered by air from the compressed air connection 210. The compressed air is typically provided from the tractor vehicle supply and the connection 210 is provided in connection with member 212 which, in turn, is connected to a paddle 214 as shown. The paddle is movable around pivot point 216 to move between the position shown in Figure 7 where the support leg is in use and to move to the position shown in Figure 10 and as it moves it acts to move the second member 204 to the position shown in Figure 10. At the same time as pivoting the second member moves linearly as defined by the slot 208. The movement of the paddle 214 is achieved by the compressed air acting on the member 212 as required.

The support leg assembly of the invention can be fitted to new vehicle trailers or alternatively can be retrofitted to existing vehicle trailers.

The method of operation of the support leg assemblies according to the invention is therefore relatively simple in that to couple the vehicle trailer with a tractor unit in accordance with the invention, requires the following procedure in an automated manner.
1. Apply manual trailer park brake.
2. Reverse tractor unit under front of trailer rubbing plate.
3. Lift trailer until the support leg assembly wheels are clear of ground, causing the support leg assembly to move to the intermediate condition of Figures 2 and 4.
4. Reverse the tractor unit fully to couple the same onto the fifth wheel and hence connect the trailer to the tractor unit.
5. Connect air and electrical connections.
6. When the red air line is connected the support leg assembly will automatically move pivotally under the influence of the support means so that the second member pivotally moves to the storage condition of Figures 3 and 5.
7. Release manual trailer park brake.
8. Drive off.

It will thus be appreciated that as the legs will automatically raise when the air line is connected to activate the lifting mechanism, there is no need for the driver to leave the vehicle cab to even check that the legs have raised off the ground once the vehicle is coupled to the trailer supported by the legs.

For the uncoupling procedure, the following occurs.
1. Apply manual trailer park brake.
2. Using tractor unit air suspension, lift the vehicle trailer above normal running height.
3. Uncouple all air and electrical connections.
4. When the red air line is disconnected the trailer support leg assembly automatically swings into the intermediate condition with the second member pivotally moving down to the in line condition with respect to the first member.
5. Remove fifth wheel locking arm dog clip and pull out locking arm.
6. Move the tractor unit forward out of the fifth wheel jaws but still under the front of the trailer.
7. Lower trailer until the support leg assembly takes full weight of trailer and is fully located in the location socket in the in-use position of Figure 1.
8. Move the tractor unit away from the trailer.

The support leg assemblies can be used individually or in pairs or in other configurations as required and the assembly in accordance with the invention is clearly advantageous over the conventional support legs in that they provide the necessary support, are less susceptible to buckling or breakage and are easier to move between the in-use and storage conditions.

The system is quicker to operate than the conventional means and is less complicated and easier to manufacture. Thus the apparatus as a whole is significantly cheaper and safer than conventional systems.

## Claims

1. A support leg assembly for a vehicle trailer, said support leg provided to allow support for a vehicle trailer on a surface when said trailer is in a stationary condition and uncoupled from a tractor unit, said support leg assembly movable between in-use and storage conditions and comprises a first member (2, 102, 202) located on the vehicle trailer and a second member (4, 104, 204) located on said first member (2, 102, 202), said second member (4, 104, 204) movable with respect to the first member (2, 102, 202) to move between the in-use condition and the storage condition, to allow the second member (4, 104, 204), when in the storage condition, to be angularly disposed with respect to the first member (2, 102, 202), the upper end of the second member (4, 104, 204) received in the in-use condition in a location socket on the first member (2, 102, 202), said second member (4, 104, 204) connected to a movement means operated by selective connection to a compressed air supply on the tractor unit, wherein engagement means between the first (2, 102, 202), and second members (4, 104, 204) are provided and include a pin (18, 206) which defines a pivot location about which the second member (4, 104, 204) rotates,
**characterized in that**
the air supply is connected after coupling of the tractor unit and trailer and the movement means operates to move the second member (4, 104, 204) from the in-use condition to the storage condition upon connection with the air supply, the air supply being disconnected prior to the uncoupling of the tractor unit and trailer, and when the compressed air supply is disconnected, the second member (4, 104, 204) is released from the storage condition to move to the in-use condition prior to the decoupling of the tractor unit from the trailer, to support said trailer, AND the pin (18, 206) is located in a slot (16, 208) which allows limited linear movement between an in-use condition and an intermediate condition from which the second member (4, 104, 204) can be pivotally moved with respect to the first member (2, 102, 202) to move the same to the storage condition.

2. An assembly according to claim 1 **characterised in that** when in the in-use condition, the second member (4,104,204) is positioned substantially in line with the first member (2,102,202).

3. An assembly according to claim 1 **characterised in that** the first member (2,102,202) includes the location socket (14) for the second member (4,104,204) when in the in-use condition to secure and locate the second member (4,104,204) in said in-use condition and allows the transfer of weight from the vehicle trailer to the second member (4,104,204) in a linear direction.

4. An assembly according to claim 3 **characterised in that** the location socket (14) is formed of rubber or other similar material, suitable to provide a cushioning effect.

5. An assembly according to claim 1 **characterised in that** the end of the second member (4,104,204) of the support leg assembly which contacts with the support surface is provided with any of the conventional forms of contact surface such as a plate or wheel.

6. An assembly according to claim 5 **characterised in that** two wheels (6) are located along a common shaft (32) with three shafts or axle supports (34,38,36), one at each outer edge of the wheel assembly and the third (36) located between the two wheels.

7. An assembly according to claim 1 **characterised in that** the assembly is used in conjunction with at least one other support leg assembly.

8. An assembly according to claim 7 **characterised in that** relative movement between the first (2,102,202) and second (4,104,204) members is powered.

9. An assembly according to claim 1 **characterised in that** the air supply to the movement means is provided from the vehicle tractor unit, when said tractor unit is connected to the trailer.

## Patentansprüche

1. Eine Stützbeinanordnung für einen Fahrzeuganhänger, wobei besag-tes Stützbein bereitgestellt wird, um eine Stütze für einen Fahrzeuganhän-ger auf einer Fläche zu ermöglichen, wenn besagter Fahrzeuganhänger sich in einem stationären Zustand befindet und von einer Sattelzugmaschine entkoppelt worden ist, besagte Stützbeinanordnung zwischen Anwendungs- und Ruhezustand bewegbar ist und ein erstes, am Fahrzeuganhänger ange-ordnetes Element (2, 102, 202) aufweist und ein zweites, an dem besagten ersten Element (2, 1021, 202) angeordnetes Element (4, 104, 204), besag-tes zweites Element (4, 104, 204) in Bezug auf das erste Element (2, 102, 202) zwischen Anwendungs- und Ruhezustand bewegbar ist, um zu ermöglichen, dass das zweite Element (4, 104, 204), wenn im Ruhezu-stand, in Bezug auf das erste Element (2, 102, 202) im Winkel angeordnet ist, das obere Ende des zweiten Elements (4, 104, 204) im Anwendungs-zustand in einer Aufnahme am ersten Element (2, 102, 202) gehalten wird, besagtes zweite Element (4, 104, 204) an ein Antriebsmittel angeschlossen ist, das durch selektiven Anschluss an eine Druckluftversor-gung an der Sattelzugmaschine betrieben wird, worauf Eingriffsmittel zwischen dem ersten Element (2, 102, 202) und dem zweiten Element (4, 104, 204) bereitgestellt werden und einen Stift (18, 206) aufweisen, der einen Dreh-punkt, um den das zweite Element (4, 104,204) sich dreht, bestimmt, **dadurch gekennzeichnet, dass** die Luftversorgung nach der Ankopplung des Anhängers und der Sattelzugmaschine angeschlossen wird und das Antriebsmittel das zweite Element (4, 104, 204) aus dem Anwendungs-zustand in den Ruhezustand nach dem Anschluss an die Luftversor-gung bewegen soll, die Luftversorgung vor der Entkopplung der Sattelzugma-schine vom Anhänger getrennt wird und wenn die Druckluftversorgung getrennt wird, das zweite Element (4, 104, 204) aus dem Ruhezustand freigegeben wird, um in den Anwendungszustand vor der Entkopplung der Sattelzugmaschine vom Anhänger bewegt zu werden, um den besagten Anhänger zu stützen und der Stift (18, 206) in einer Aussparung (16, 208) angeordnet ist, wodurch begrenzte lineare Bewegung zwischen dem Anwendungszustand und einem Zwischenzustand ermöglicht wird, aus dem das zweite Element (4, 104, 204) drehbar in Bezug auf das erste Element (2, 102, 202) bewegt werden kann, um selbiges in den Ruhezustand zu bewegen.

2. Eine Anordnung nach Anspruch 1, **dadurch gekennzeichnet, dass** wenn diese sich im Anwendungszustand befindet, das zweite Element (4,104,204) größtenteils auf das erste Element (2, 102, 202) ausgerichtet ist.

3. Eine Anordnung nach Anspruch 1, **dadurch gekennzeichnet, dass** das erste Element (2, 102, 202) eine Aufnahme (16) für das zweite Element (4, 104, 204) aufweist, wenn im Anwendungszustand, um das zweite Element (4, 104, 204) im besagten Anwendungszustand zu sichern und zu orten und die Gewichtsübertragung von dem Fahrzeuganhänger auf das zweite Element (4, 104, 204) in einer linearen Richtung zu ermöglichen.

4. Eine Anordnung nach Anspruch 3, **dadurch gekennzeichnet, dass** die Aufnahme (16) aus Gummi oder anderem ähnlichen Material gebildet ist, welches geeignet ist, einen dämpfende Wirkung bereitzustellen.

5. Eine Anordnung nach Anspruch 1, **dadurch gekennzeichnet, dass** das Ende des zweiten Elements (4, 104, 204) der Stützbeinanordnung, welche mit der Stützfläche in Berührung kommt, mit einer beliebigen Form von Kontaktflächen, wie eine Platte oder Rad, versehen ist.

6. Eine Anordnung nach Anspruch 5, **dadurch gekennzeichnet, dass** zwei Räder (6) an einer gemeinsamen Welle (32) mit drei Wellen- oder Achsen-stützen (34, 38, 36) angeordnet sind, wobei eine an jeder Außenkante der Radanordnung angeordnet ist, und die dritte (36) sich zwischen den beiden Rädern befindet.

7. Eine Anordnung nach Anspruch 1, **dadurch gekennzeichnet, dass** die Anordnung zusammen mit wenigstens einer weiteren Stützbeinanordnung verwendet wird.

8. Eine Anordnung nach Anspruch 7, **dadurch gekennzeichnet, dass** die relative Bewegung zwischen dem ersten Element (2, 102, 202) und zweiten Elementen (4,104,204) angetrieben wird.

9. Eine Zusammensetzung nach Anspruch 1, **dadurch gekennzeichnet, dass** das Luftversorgungsmittel für das Antriebsmittel von der Sattelzugma-schineneinheit bereitgestellt wird, wenn die besagte Sattelzugmaschine an den Anhänger gekoppelt ist.

## Revendications

1. Ensemble à béquille de support pour une remorque de véhicule, ladite béquille de support étant prévue pour pouvoir supporter une remorque de véhicule sur une surface lorsque ladite remorque est en une position de stationnement et dételée d'un véhicule tracteur, ledit ensemble à béquille de support pouvant être déplacé entre un état d'utilisation et un état d'arrimage; l'ensemble comprend un premier élément (2, 102, 202) placé sur la remorque du véhicule et un second élément (4, 104, 204) placé sur le premier élément (2, 102, 202), ledit second élément (4, 104, 204) pouvant être déplacé relativement audit premier élément (2, 102, 202) pour l'exécution d'un déplacement entre l'état d'utilisation et l'état d'arrimage, pour que le second élément (4, 104, 204) puisse, quand il est à l'état d'arrimage, être disposé angulairement relativement au premier élément (2, 102, 202), l'extrémité supérieure du second élément (4, 104, 204) étant reçue, pendant l'utilisation, dans un manchon de maintien prévue sur le premier élément (2, 102, 202), ledit second élément (4, 104, 204) étant connecté à des moyens de mouvement commandés par raccordement sélectif à une alimentation en air comprimé montée sur le véhicule tracteur, des moyens de mise en prise étant prévus entre le premier élément (2, 102, 202) et le second élément (4, 104, 204) et comprenant un axe de rotule (18, 206) qui définit un point de pivot autour duquel tourne le second élément (4, 104, 204),
**caractérisé en ce que**
l'alimentation en air est connectée après l'attelage de la remorque au véhicule tracteur, et les moyens d'actionnement interviennent pour déplacer le second élément (4, 104, 204) entre l'état d'utilisation et l'état d'arrimage après le raccordement à l'alimentation en air, l'alimentaton en air étant déconnectée avant le dételage de la remorque; une fois l'alimentation en air déconnectée, le second élément (4, 104, 204) est libéré de son état d'arrimage pour passer à l'état d'utilisation avant le dételage de la remorque, pour supporter ladite remorque, et l'axe de rotule (18, 206) est placé dans une fente (16, 208) qui rend possible un mouvement linéaire limité entre un état d'utilisation et un état intermédiaire à partir duquel le second élément (4, 104, 204) peut exécuter un mouvement de pivot relativement au premier élément (2, 102, 202) pour ramener celui-ci jusqu'à son état d'arrimage.

2. Ensemble selon la revendication 1, **caractérisé en ce que**, en l'état d'utilisation, le second élément (4, 104, 204) est placé sensiblement dans l'axe du premier élément (2, 102, 202).

3. Ensemble selon la revendication 1, **caractérisé en ce que** le premier élément (2, 102, 202) comprend le manchon de maintien (14) du second élément (4, 104, 204) pendant qu'il se trouve en état d'utilisation, afin de fixer le second élément (4, 104, 204) et de le retenir en ledit état d'utilisation, ce qui rend possible un transfert de poids depuis la remorque du véhicule jusqu'au second élément (4, 104, 204) dans une direction linéaire.

4. Ensemble selon la revendication 3, **caractérisé en ce que** le manchon de maintien (14) est formée en caoutchouc ou autre matière analogue susceptible de produire un effet d'amortissement.

5. Ensemble selon la revendication 1, **caractérisé en ce que** l'extrémité du second élément (4,104, 204) de l'ensemble à béquille de support qui est en contact avec la surface de support est pourvue de l'une quelconque des formes conventionnelles de surfaces de contact, une plaque ou une roue par exemple.

6. Ensemble selon la revendication 5, **caractérisé en ce que** deux roues (6) sont placées le long d'un essieu commun (32) avec trois corps ou supports d'essieu (34, 36, 38), dont un à chaque bord extérieur de l'ensemble à roues, le troisième (36) étant monté entre les deux roues.

7. Ensemble selon la revendication 1, **caractérisé en ce que** l'ensemble est utilisé simultanément avec au moins un autre ensemble à béquille de support.

8. Ensemble selon la revendication 7, **caractérisé en ce que** le mouvement relatif entre les premier (2, 102, 202) et second (4, 104, 204) éléments est effectué sous commande mécanisée.

9. Ensemble selon la revendication 1, **caractérisé en ce que** l'alimentation en air des moyens d'actionnement est fournie à partir du véhicule tracteur lorsque ledit véhicule tracteur est raccordé à la remorque.
